(19) Europäisches Patentamt / European Patent Office / Office européen des brevets

(11) **EP 2 930 659 B1**

(12) **FASCICULE DE BREVET EUROPEEN**

(45) Date de publication et mention de la délivrance du brevet:
**21.12.2016 Bulletin 2016/51**

(51) Int Cl.:
**G06K 9/00** (2006.01)     **G06K 9/46** (2006.01)
**G06K 9/52** (2006.01)

(21) Numéro de dépôt: **15162364.2**

(22) Date de dépôt: **02.04.2015**

(54) **PROCÉDÉ DE DÉTECTION DE POINTS D'INTÉRÊT DANS UNE IMAGE NUMÉRIQUE**

VERFAHREN ZUM ERKENNEN VON INTERESSANTEN PUNKTEN IN EINEM DIGITALEN BILD

METHOD FOR DETECTING POINTS OF INTEREST IN A DIGITAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.04.2014 FR 1453161**

(43) Date de publication de la demande:
**14.10.2015 Bulletin 2015/42**

(73) Titulaire: **Parrot Drones**
**75010 Paris (FR)**

(72) Inventeur: **Florentz, Gaspard**
**75010 PARIS (FR)**

(74) Mandataire: **Dupuis-Latour, Dominique et al**
**Bardehle Pagenberg**
**10, boulevard Haussmann**
**75009 Paris (FR)**

(56) Documents cités:
**US-A1- 2013 279 813**

- **KHAN MUHAMMAD ALTAMASH ET AL: "Characterization of SURF interest point distribution for visual processing in sensor networks", 2013 18TH INTERNATIONAL CONFERENCE ON DIGITAL SIGNAL PROCESSING (DSP), IEEE, 1 juillet 2013 (2013-07-01), pages 1-7, XP032498407, ISSN: 1546-1874, DOI: 10.1109/ICDSP.2013.6622701 [extrait le 2013-10-06]**
- **GIOACCHINO VINO ET AL: "Revisiting Harris Corner Detector Algorithm: A Gradual Thresholding Approach", 26 juin 2013 (2013-06-26), IMAGE ANALYSIS AND RECOGNITION, SPRINGER BERLIN HEIDELBERG, BERLIN, HEIDELBERG, PAGE(S) 354 - 363, XP047031333, ISBN: 978-3-642-39093-7 * le document en entier ***
- **Albert S Huang ET AL: "Visual Odometry and Mapping for Autonomous Flight Using an RGB-D Camera", Int. Symposium on Robotics Research (ISRR), 28 août 2011 (2011-08-28), XP055133937, Extrait de l'Internet: URL:http://www.cs.washington.edu/robotics/ projects/postscripts/Huang-ISRR-2011.pdf [extrait le 2014-08-08]**
- **SCHMID C ET AL: "EVALUATION OF INTEREST POINT DETECTORS", INTERNATIONAL JOURNAL OF COMPUTER VISION, KLUWER ACADEMIC PUBLISHERS, NORWELL, US, vol. 37, no. 2, 1 janvier 2000 (2000-01-01), pages 151-172, XP008032572, ISSN: 0920-5691, DOI: 10.1023/A:1008199403446**

EP 2 930 659 B1

## Description

L'invention concerne le traitement des images numériques, et plus précisément la détection dans une telle image des "points d'intérêt" ou "coins", notamment pour des traitements destinés à des systèmes de robotique et de vision par ordinateur.

Les "coins", "points d'intérêt" ou encore *"landmarks"* sont des éléments de petite dimension d'une image qui présentent des caractéristiques d'invariance permettant notamment de les retrouver d'une image à la suivante. L'analyse des déplacements des points d'intérêt dans l'image est utilisée par divers algorithmes de reconnaissance de forme, d'analyse des déplacements de la caméra, de reconstruction d'un espace bidimensionnel ou tridimensionnel, etc.

L'idée de base est qu'un point d'intérêt détecté sur une image reste souvent un point d'intérêt sur les images suivantes, de sorte que l'analyse des variations dynamiques de l'image se réduit donc à l'analyse des changements de position des points d'intérêt, c'est-à-dire à une analyse d'une liste évolutive de points d'intérêt pour en extraire des descripteurs pertinents.

Une détection satisfaisante des points d'intérêt dans l'image est donc un préalable essentiel à tout traitement de ce type, l'algorithme de détection utilisé devant être également robuste et économe en ressources de calcul s'il doit être mis en oeuvre "à la volée" par un système embarqué, avec reconnaissance des points d'intérêt et extraction des descripteurs en temps réel ou quasi-réel.

Divers algorithmes de détection de points d'intérêt ont pu être proposés, parmi lesquels on peut citer notamment les algorithmes FAST (*Features from Accelerated Segment Test*), SURF *(Speeded-Up Robusf Features)* ou SIFT (*Scale-Invariant Feature Transform).*

L'algorithme FAST est notamment décrit par :

[1] E. Rosten, R. Porter, and T. Drummond, "Faster and Better: A Machine Learning Approach to Corner Détection", IEEE Trans. Pattern Analysis and Machine Intelligence, Vol. 32, pp. 105-119, 2010.

Une version perfectionnée d'un tel algorithme FAST est décrite dans le WO 2013/055448 A1, qui expose un procédé permettant de détecter et de classifier efficacement les points d'intérêt dans une image numérique.

Pour l'algorithme SIFT, on pourra par exemple se référer à :

[2] D. G. Lowe, "Distinctive Image Features from Scale-Invariant Key-points", Int. J. Comput. Vision, Vol. 60, No. 2, pp. 91-110, Nov. 2004. Et pour l'algorithme SURF, à :

[3] H. Bay, A. Ess, T. Tuytelaars, and L. J. V. Gool, "Speeded-up Robust Features (SURF)", Computer Vision and Image Understanding, Vol. 110, No. 3, pp. 346-359, 2008, et

[4] M.A. Khan, G. Dan and V. Fodor, "Characterization of SURF Interest Point Distribution for Visual Processing in Sensor Networks", 18th International Conference on Digital Signal Processing (DSP), 2013, pp. 1-7.

Ces algorithmes sont tous paramétrables par une donnée appelée "seuil de détection" qui conditionne la sensibilité de détection des points d'intérêt.

Essentiellement, l'image courante est parcourue pixel par pixel et l'algorithme détermine si, pour chaque pixel analysé de l'image, un score fonction de critères prédéfinis est ou non supérieur au seuil de détection paramétré en entrée. Selon que le score est situé au-dessus ou au-dessous de ce seuil, on considère que l'on est, ou non, en présence d'un point d'intérêt sur l'image.

Dès lors, avec un seuil de détection bas, l'algorithme fournit un nombre élevé de points d'intérêt - mais avec le risque de délivrer de nombreux points d'intérêt inutiles, qui ne se retrouveront pas sur les images suivantes et seront donc pénalisants en terme de puissance de calcul utilisée. Inversement, un seuil de détection élevé permet d'éliminer de nombreux points d'intérêt non pertinents, ne présentant pas la caractéristique recherchée d'invariance d'une image à la suivante, mais au risque de ne pas détecter certains points d'intérêt utiles, par exemple dans des régions de l'image présentant un contraste insuffisant, une texture trop uniforme, etc. Un nombre insuffisant de points d'intérêt peut également avoir un impact négatif sur les résultats des traitements effectués en aval.

On pourra à cet égard se référer à l'article précité [4] de Khan et al., qui présente une étude statistique de la distribution du nombre de points d'intérêt en fonction du seuil de détection.

Le but de l'invention est d'améliorer les performances de ces algorithmes de détection de points d'intérêt, en modifiant de manière dynamique leur paramétrage, mais sans en changer le fonctionnement interne. L'invention sera ainsi applicable à un très grand nombre d'algorithmes de détection de points d'intérêt, tout particulièrement à un algorithme de type FAST pour lequel elle procurera des avantages particulièrement marquants. Mais cette application à un algorithme FAST n'est aucunement limitative, l'invention étant applicable à d'autres types d'algorithmes dès lors que ceux-ci peuvent être paramétrés avec un seuil de détection ajustable, comme dans le cas notamment des algorithmes SURF et SIFT. L'idée de base de l'invention est d'opérer, en amont de la détection de points d'intérêt proprement dite, une analyse préalable de l'image courante et de déterminer de manière dynamique, en fonction du résultat de cette analyse, la valeur du seuil de détection qui sera utilisée pour la détection des points d'intérêt de l'image suivante.

En d'autres termes, le seuil de détection ne sera plus un paramètre figé, réglé de manière empirique ou éventuellement modifié par une boucle de rétroaction, mais une donnée d'entrée de l'algorithme de détection modifiable dynamiquement à chaque image de manière à adapter au mieux la réponse de l'algorithme de détection en fonction des variations rapides de l'image de la scène captée par la caméra.

La technique de l'invention vise en particulier à maintenir le nombre de points d'intérêt détectés par l'algorithme à un niveau sensiblement constant, choisi *a priori* comme étant optimal, et ceci même en présence d'une scène très changeante.

Un exemple typique de scène changeante est celle captée par une caméra embarquée sur une automobile, qui délivre des séquences video présentant des variations très importantes et très rapides aussi bien du contenu de l'image que de sa luminosité et de son contraste, en fonction de la présence ou non de bâtiments au bord de la route, de l'apparence de ces bâtiments, du passage dans des tunnels ou sous des ponts, de l'éblouissement par un véhicule venant en sens inverse, etc.

À cet égard, l'invention cherche à résoudre deux problèmes spécifiques rencontrés avec la plupart des détecteurs de points d'intérêt :

- le premier problème est celui de l'instabilité temporelle : avec une séquence video hétérogène, l'algorithme détecte des points d'intérêt en nombre très variable d'une image à l'autre, en fonction des caractéristiques de contraste, de texture, d'éclairement, etc. des images. Concrètement, et selon les images de la séquence, on peut se retrouver avec un nombre élevé, voire excessif de points d'intérêt, ce qui aura été très pénalisant en termes de ressources de calcul utilisées pour l'analyse de cette image, ou inversement avec un nombre trop faible de points d'intérêt, conduisant à une dégradation des performances pour les traitements opérés en aval du détecteur de points d'intérêt ;
- le second problème est celui de l'instabilité spatiale : même si, globalement, une image compte un nombre de points d'intérêt détectés suffisamment élevé et sensiblement constant, les détections peuvent être réparties de manière très inégale, avec très peu de points d'intérêt dans certaines régions de l'image et beaucoup dans d'autres, ce qui aura les mêmes impacts négatifs que précédemment en ce qui concerne les performances des traitements effectués en aval.

Une solution consiste à utiliser un seuil de détection fixe, suffisamment bas pour générer un nombre acceptable de points d'intérêt en toutes circonstances, notamment dans des scènes à faible contraste. Si le nombre de détections est excessif, on opère alors un filtrage des points d'intérêt surnuméraires en fonction de leur degré de pertinence.

Cette solution implique cependant un coût élevé en termes de ressources de calcul, du fait du temps de traitement accru, l'algorithme FAST étant tout particulièrement affecté par ce phénomène en cas de choix d'un seuil trop faible. De plus, bien que cette solution permette de stabiliser les données de sortie en termes de nombre de points d'intérêt, elle n'est pas, fondamentalement, une méthode adaptative.

Une autre manière de procéder consiste à faire varier le seuil en prévoyant une boucle de rétroaction proportionnelle simple entre les détections courantes et le résultat souhaité, comme décrit notamment par :

[5] A. Huang, N. Roy, A. Bachrach, P. Henry, M. Krainin, D. Maturana, and D. Fox, "Visual Odometry and Mapping for Autonomous Flight using an RGB-D Camera", Proc. of the International Symposium of Robotics Research (ISRR), 2011.

Une technique de même nature est décrite par le US 2013/0279813 A1, où le seuil est ajusté de manière dynamique de manière à détecter un nombre constant de points d'intérêt dans les images successives. La solution proposée par ce document se base sur un nombre-cible de points d'intérêt à détecter dans des sous-régions de l'image, nombre éventuellement pondéré par des valeurs de taux de reconnaissance calculés pour ces sous-régions.

Bien que ces solutions présentent un caractère d'adaptabilité au contenu de l'image, elles présentent deux limitations sérieuses :

- en premier lieu, elles ne permettent pas de pallier des variations soudaines de l'image, ni en termes de contenu de la scène ni en termes de luminosité globale (par exemple au moment de l'entrée ou de la sortie d'un tunnel). Au surplus, les systèmes de correction automatique de l'exposition des caméras ont tendance à aggraver ce problème, dans la mesure où ces systèmes supposent une réponse linéaire du capteur et sont également basés sur des statistiques moyennes de l'image, qui ne reflètent pas la réalité des variations de la scène ;
- en second lieu, pour opérer la rétroaction, ces systèmes présupposent une linéarité entre le seuil de détection et le nombre de points d'intérêt détectés par l'algorithme, ce qui est une hypothèse simplificatrice ne conduisant pas, concrètement, à des résultats véritablement satisfaisants à l'égard de séquences d'images hétérogènes.

L'invention propose une nouvelle technique de détection des points d'intérêt permettant de pallier les inconvénients ci-dessus en régulant dynamiquement, de façon précise et efficace, le seuil de détection de l'algorithme.

L'invention procure en particulier les avantages suivants :

- régulation du temps de calcul de la détection, qui reste sensiblement constant pour une image, même en présence de séquences d'images très hétérogènes ;
- diminution et stabilisation du temps de calcul moyen de l'algorithme en aval du détecteur de points d'intérêt (algorithme d'analyse de déplacement de la caméra, de cartographie...), dans la mesure où cet algorithme traitera un nombre sensiblement constant de points d'intérêt en entrée ;
- adaptation automatique à la complexité de la scène, permettant notamment de garder un nombre suffisant de points d'intérêt détectés lorsque la scène est moins texturée (l'exemple typique étant la traversée d'un tunnel en voiture) ;
- augmentation du taux de points d'intérêt pertinents, c'est-à-dire de points d'intérêt qui pourront être retrouvés d'une image à la suivante :

  en effet, les points d'intérêt détectés par l'algorithme selon l'invention sont en moyenne sensiblement meilleurs de ce point de vue, de sorte que les opérations ultérieures de calcul pourront être exécutées de façon plus efficace et plus rapide ;

- excellente répartition des points d'intérêt dans les différentes zones de l'image, conduisant également à une meilleure efficacité des algorithmes en aval de la détection ;
- simplicité de l'ajustement du nombre de points d'intérêt optimal souhaité, permettant un portage aisé de l'algorithme d'une plateforme à une autre et une adaptation pour des versions différentes (par exemple version professionnelle et version grand public).

Le point de départ de l'invention est la constatation de ce que, pour toute image et quelle que soit l'échelle à laquelle cette image est considérée (fine ou grossière), la caractéristique donnant le nombre N de points d'intérêt détectés pour un seuil de détection $\tau$ donné (ramené à une quantité homogène au pixel) est bien représentée par une fonction exponentielle décroissante, notamment une fonction exponentielle décroissante en racine carrée du type :

$$N(\tau) = C \exp\left\{ -\sqrt{\frac{\tau}{\sigma}} \right\}$$

où C et $\sigma$ sont des paramètres liés à l'image courante.

Dans la mesure où une telle fonction ne nécessite que la détermination de deux paramètres ($C$ et $\sigma$), un tel modèle sera très rapide à calculer, car il suffira de deux itérations de l'algorithme de détection, pour deux valeurs de seuil $\tau$ différentes, avec l'avantage que la seconde itération pourra être appliquée aux seuls points d'intérêt sélectionnés par la première itération, donc de manière encore plus rapide.

Une fois les paramètres du modèle exponentiel $N(\tau)$ ainsi déterminés, ce modèle pourra être utilisé à l'image suivante pour déterminer le seuil $\tau$ à appliquer à l'algorithme de détection, en fonction d'un nombre N de points d'intérêt fixé *a priori* et considéré comme optimal.

On notera que la démarche de l'invention, qui consiste à choisir *a priori* un nombre de points d'intérêt que doit délivrer l'algorithme et à déterminer, en fonction de ce nombre, le seuil de détection à appliquer, est inverse de la démarche conventionnelle, qui consiste à fixer *a priori* le seuil de détection $\tau$ (éventuellement ajusté par une boucle de rétroaction), et à recueillir en sortie un nombre N de points d'intérêt, nombre qui peut varier dans des proportions importantes si la séquence d'images est particulièrement hétérogène.

La technique de l'invention pourra être mise en oeuvre de diverses manières que l'on décrira plus en détail par la suite, permettant notamment de réduire dans des proportions très importantes les phénomènes évoqués plus haut d'instabilité temporelle et d'instabilité spatiale de la détection des points d'intérêt. On verra également que ces mises en oeuvre particulières peuvent être opérées sans augmentation substantielle des ressources de calcul et du temps de traitement, donc de façon quasiment "gratuite" en termes de coût de traitement.

Plus précisément, l'invention propose un procédé de détection de points d'intérêt dans une image numérique d'une séquence d'images d'une scène captée par une caméra. Ce procédé met en oeuvre, de manière en elle-même connue un algorithme de recherche de points d'intérêt paramétrable par un seuil de détection tel que le nombre de points d'intérêt détectés dans l'image varie en fonction du niveau du seuil.

Ce procédé prévoit, selon l'invention, la modélisation par une fonction exponentielle décroissante de la caractéristique donnant le nombre de points d'intérêt détectés en fonction du seuil, cette fonction exponentielle étant paramétrable dynamiquement par des valeurs liées à une image à analyser. Le procédé comprend des étapes de :

a) détermination, pour une image courante, des valeurs de paramétrage de la fonction exponentielle décroissante ;
b) prédiction, pour ladite image courante, d'une valeur optimale du seuil de détection par utilisation de la caractéristique modélisée, paramétrée avec les valeurs déterminées à l'étape a) ; et
c) application, pour au moins une image suivant ladite image courante, de l'algorithme de recherche de points d'intérêt avec la valeur optimale de seuil de détection calculée à l'étape b).

La valeur optimale de seuil de détection prédite à l'étape b) peut notamment être une valeur correspondant à un nombre donné de points d'intérêt, tel qu'indiqué par ladite caractéristique donnant le nombre de points d'intérêt détectés en fonction du seuil.

Très avantageusement, la fonction exponentielle décroissante est une fonction exponentielle décroissante en racine carrée :

$$N(\tau) = C \exp\left\{ - \sqrt{\frac{\tau}{\sigma}} \right\}$$

$\tau$ étant la valeur du seuil de détection, ramenée à une quantité homogène au pixel,
$N$ étant le nombre de points d'intérêt détectés pour un seuil $\tau$, et
$C$ et $\sigma$ étant lesdites valeurs de paramétrage liées à l'image courante. Dans une forme particulière de mise en oeuvre de l'invention, l'étape a) de détermination, pour une image courante, des valeurs de paramétrage de la fonction exponentielle comprend les sous-étapes suivantes :

a1) une première recherche de points d'intérêt dans l'image courante par l'algorithme de recherche avec une première valeur prédéterminée du seuil de détection, donnant pour résultat un premier nombre de points d'intérêt ;
a2) au moins une seconde recherche de points d'intérêt dans l'image courante par l'algorithme de recherche avec une seconde valeur du seuil de détection supérieure à la première valeur prédéterminée du seuil de détection, donnant pour résultat un second nombre de points d'intérêt ; et
a3) la détermination des valeurs de paramétrage $C$ et $\sigma$ à partir des nombres de points d'intérêt obtenus aux étapes a1) et a2).

Le procédé peut avantageusement comprendre, lors de l'exécution itérative des étapes a) et b) :

- l'application d'informations d'auto-exposition de la caméra comme données d'entrée complémentaires pour la prédiction du seuil de détection.

Selon un autre aspect particulièrement avantageux de l'invention, le procédé comprend en outre :

- la division de l'image courante en une pluralité de sous-images de taille réduite ;
- l'exécution des étapes a) et b) indépendamment pour les différentes sous-images de l'image courante, avec pour résultat une valeur optimale de seuil de détection propre à chaque sous-image ; et
- l'exécution de l'étape c) avec application, pour chaque sous-image de l'image suivante, de l'algorithme de recherche de points d'intérêt avec la valeur optimale de seuil de détection respective propre à cette sous-image. La valeur optimale de seuil de détection peut notamment être une valeur correspondant à un même nombre prédéterminé de points d'intérêt pour toutes les sous-images.

Dans une forme particulière de mise en oeuvre de ce second aspect de l'invention, le procédé comprend :

- préalablement à l'étape a), la production d'une représentation multirésolution de type pyramide d'images, modélisant l'image courante de la scène captée à différentes résolutions successivement croissantes ; et
- l'exécution itérative des étapes a) et b) pour chaque niveau de la représentation multirésolution en commençant par le niveau de moindre résolution, la valeur de seuil de détection déterminée pour un niveau donné étant appliquée comme donnée d'entrée pour la prédiction du seuil de détection au niveau de résolution supérieure.

Selon divers autres aspects avantageux de ce second aspect :

- l'exécution de l'étape c) comprend l'application, pour chaque niveau de la représentation multirésolution de l'image suivante, de l'algorithme de recherche de points d'intérêt avec la valeur optimale de seuil de détection respective propre à ce niveau ;
- l'exécution itérative des étapes a) et b) comprend, pour chaque niveau de la représentation multirésolution, l'application, comme données d'entrée complémentaires pour la prédiction du seuil de détection au niveau de résolution supérieure, des seuils optimaux et des seuils appliqués correspondant aux niveaux de résolutions inférieurs et/ou d'informations d'auto-exposition de la caméra ;
- le procédé comprend en outre : la division des images aux différents niveaux de la pyramide d'images en une pluralité de sous-images de taille réduite ; l'exécution des étapes a) et b) indépendamment pour les différentes sous-images, avec pour résultat une valeur optimale de seuil de détection propre à chaque sous-image ; et l'exécution de l'étape c) avec application, pour chaque sous-image de l'image suivante, de l'algorithme de recherche de points d'intérêt avec la valeur optimale de seuil de détection respective propre à cette sous-image. La valeur optimale de seuil de détection peut notamment être une valeur correspondant à un même nombre prédéterminé de points d'intérêt pour toutes les sous-images.

On va maintenant décrire un exemple de mise en oeuvre de l'invention, en référence aux dessins annexés où les mêmes références désignent d'une figure à l'autre des éléments identiques ou fonctionnellement semblables.

La Figure 1 illustre de façon schématique le contexte de la détection des points d'intérêt et l'enchainement des différents traitements.

La Figure 2 représente un pixel avec son voisinage, pour illustrer une technique de détection des points d'intérêt.

La Figure 3 est un relevé donnant le nombre de points d'intérêt détectés pour un exemple de séquence d'images, dans le cas d'une technique conventionnelle et avec la technique selon l'invention.

La Figure 4 illustre le modèle exponentiel décroissant utilisé selon l'invention pour relier le nombre de points d'intérêt détectés au seuil de détection de l'algorithme.

La Figure 5 est une illustration de la représentation multirésolution de type pyramide d'images, pour une même image courante considérée à différentes résolutions.

La Figure 6 illustre, sous forme de schéma par blocs, l'enchainement des différentes étapes de la détection des points d'intérêt avec une approche multirésolution.

La Figure 7 illustre la caractéristique donnant, à différentes échelles de résolution, le nombre de points d'intérêt en fonction du seuil de détection, à la fois pour le modèle théorique et les données réelles.

La Figure 8 illustre les variations du nombre de points d'intérêt, pour plusieurs niveaux de résolution, respectivement pour une technique conventionnelle, pour une technique selon l'invention avec prédiction seulement temporelle et pour une technique selon l'invention avec prédiction à la fois temporelle et spatiale.

La Figure 9 illustre, pour différents niveaux de résolution de l'image, les variations du nombre de points d'intérêt détectés respectivement pour une technique conventionnelle avec un seuil constant et pour une technique selon l'invention, ainsi que les variations correspondantes observées du seuil de détection dans ce dernier cas.

La Figure 10 illustre un perfectionnement selon une technique de *bucketing* consistant à diviser l'image en une pluralité de zones auxquelles l'algorithme de l'invention est appliqué de façon indépendante pour chaque zone.

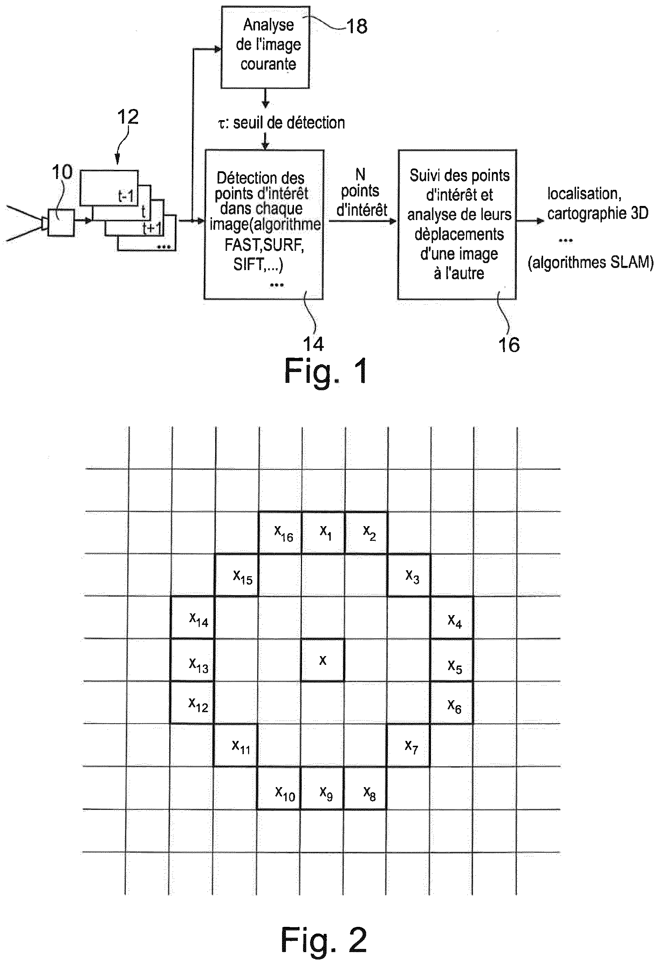

Sur la Figure 1, la référence 10 désigne une caméra captant une scène et délivrant une séquence d'images numériques 12 à des instants $t$-1, $t$, $t$+1... Chacune de ces images fait l'objet d'un traitement par un algorithme détecteur de points d'intérêt 14, qui reçoit en entrée les pixels de l'image courante et délivre en sortie des données d'identification de points d'intérêt, ces points d'intérêt étant au nombre de $N$.

Les N points d'intérêt délivrés en sortie par l'algorithme de détection 14 sont appliqués en entrée à un algorithme d'analyse 16, qui va étudier les déplacements des points d'intérêt (*tracking*) sur les images successives de manière à produire des données de localisation (à partir du déplacement de la caméra) et de construction d'une carte de ces déplacements, conservées en mémoire, par exemple pour reconstituer un maillage tridimensionnel de l'espace traversé, y ajouter des éléments de réalité augmentée, etc. Ces algorithmes 16, qui sont typiquement des algorithmes de type SLAM (*Simultaneous Localization And Mapping*) ne font pas partie de l'invention, qui ne concerne que la détection préalable des points d'intérêt (bloc 14).

L'algorithme 14 est paramétré par un seuil de détection $\tau$, qui permet d'ajuster la sensibilité de l'algorithme. Il s'agit d'un paramètre présent dans un grand nombre d'algorithmes détecteurs de points d'intérêt.

Si l'on prend comme exemple (non limitatif) l'algorithme FAST, et en référence à la Figure 2, celui-ci opère, pour chaque pixel $x$ de l'image, une analyse des pixels $\{x_1,...,x_{16}\}$ situés approximativement sur un cercle entourant le pixel $x$ considéré.

La fonction de décision suivante est utilisée, pour chaque position $p$ de pixel $x$ analysé :

$$S_p(x_i) = \begin{cases} \text{d}, & I(x_i) \leq I(p) - \tau \\ \text{s}, & I(p) - \tau < I(x_i) < I(p) + \tau \\ \text{b}, & I(p) + \tau \leq I(x_i) \end{cases}$$

Le seuil de détection $\tau$ permet d'ajuster le seuil de discrimination pour déterminer si la luminosité $I(x_i)$ du pixel $x_i$ du voisinage considéré est significativement plus élevée ($b$), plus faible ($d$) ou similaire ($s$) par rapport à la luminosité $I(p)$ du pixel central considéré $x$. On considère que l'on est en présence d'un point d'intérêt si un nombre contigu $m \geq M$ (par exemple $M$= 9) de pixels de l'ensemble $\{x_1,..., x_{16}\}$ sont de type $d$ ou $b$. Comme on le comprendra aisément, avec un tel algorithme FAST (et, de même avec d'autres algorithmes de détection tels que SURF, SIFT...), pour un seuil donné $\tau$ on obtiendra un plus grand nombre $N$ de points d'intérêt avec une image fortement contrastée qu'avec une image homogène, ces variations pouvant être typiquement dans un rapport de l'ordre de un à dix.

Sur une séquence d'images hétérogène, le nombre $N$ pourra varier de façon très importante d'une image à la suivante (instabilité temporelle), ainsi qu'entre différentes zones d'une même image courante (instabilité spatiale).

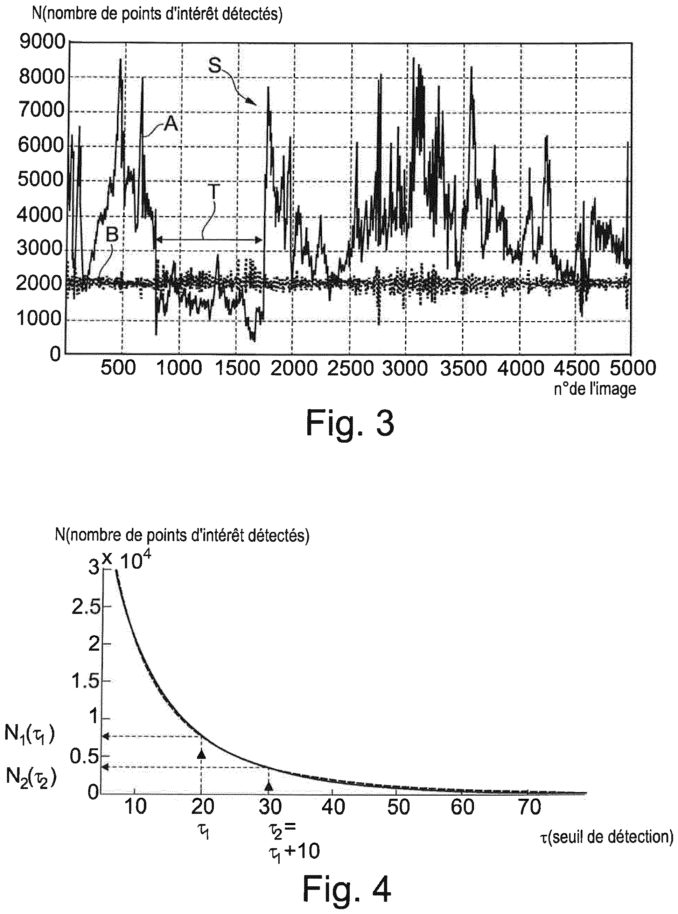

Sur la Figure 3, la caractéristique A illustre un exemple de variation du nombre $N$ de points d'intérêt détectés par un algorithme conventionnel de type FAST, pour une séquence d'images captées par la caméra frontale d'une voiture en déplacement dans un environnement urbain : dans certains cas, le nombre $N$ de points d'intérêt détectés peut atteindre, voire dépasser 7000 à 8000 points d'intérêt tandis que dans d'autres cas (par exemple la région T correspondant à la traversée d'un tunnel), ce nombre peut brusquement descendre au-dessous de 2000 points d'intérêt, voire moins de 1000 points d'intérêt, pour remonter ensuite brusquement à la sortie du tunnel (zone S) à des valeurs de 7000 à 8000 points d'intérêt. Comme on l'a expliqué en introduction, ces variations extrêmes du nombre de points d'intérêt détectés dégradent considérablement les performances globales des algorithmes opérant en aval (bloc 16 sur la Figure 1) et occupent inutilement des ressources de calcul importantes.

La technique de l'invention consiste à modifier de manière dynamique et adaptative le seuil de détection $\tau$, par une analyse de l'image courante (bloc 18) et application à la détection des points d'intérêt dans l'image suivante (bloc 14) du seuil $\tau$ ainsi déterminé.

L'algorithme de l'invention est basé sur une modélisation de la caractéristique donnant le nombre $N$ de points d'intérêt détectés en fonction du seuil $\tau$.

De façon caractéristique, cette modélisation est opérée par une fonction exponentielle décroissante, notamment une fonction en racine carrée de la forme :

$$N(\tau) = C \exp \left\{ - \sqrt{\frac{\tau}{\sigma}} \right\}$$

$\tau$ étant la valeur du seuil de détection, ramenée à une quantité homogène au pixel : en effet, selon les détecteurs le seuil conventionnellement défini peut être une quantité homogène au pixel carré (par exemple pour un détecteur SURF), ou même au pixel à la puissance quatrième (détecteur de Harris). Dans ce cas, il faut d'abord ramener le seuil a une quantité homogène au pixel ou, de manière équivalente, modifier la fonction ci-dessus, par exemple par remplacement de la fonction "racine carrée" par la fonction "racine quatrième", pour un détecteur SURF.

On notera que ce modèle ne nécessite que la détermination de deux paramètres ($C$ et $\sigma$) et qu'il est de ce fait possible d'opérer une interpolation rapide et simple de la fonction à partir de deux mesures seulement, c'est-à-dire deux itérations de l'algorithme de détection des points d'intérêt.

La fonction exponentielle décroissante $N(\tau)$ ci-dessus est représentée graphiquement Figure 4.

Avantageusement, une première détection des points d'intérêt de l'image courante est opérée pour un seuil $\tau 1$, par exemple $\tau_1$ = 20, donnant un nombre $N_1$ de points d'intérêt. L'itération suivante est opérée avec un seuil $\tau_2$, donnant un second nombre $N_2$ de points d'intérêt. Très avantageusement, le seuil $\tau_2$ est supérieur au seuil $\tau_1$, ce qui permet de réduire la seconde recherche de points d'intérêt aux seuls points d'intérêt (en nombre $N_1$) déjà déterminés par la première itération.

De préférence, le second seuil $\tau_2$ est décalé du premier seuil $\tau_1$ d'une valeur constante, par exemple $\tau_2 = \tau_1 + 10$, d'une valeur garantissant une interpolation robuste et rapide.

En variante, l'incrément entre $\tau_1$ et $\tau_2$ peut être modifié dynamiquement en fonction de la courbure estimée de la caractéristique, ce qui apportera un gain marginal.

À partir des deux valeurs $N_1$ et $N_2$ obtenues, on peut déterminer aisément les paramètres $\sigma$ et $C$ de la caractéristique :

$$\begin{cases} \sigma & = & \dfrac{(\sqrt{\tau_1} - \sqrt{\tau_2})^2}{\ln^2(N_1/N_2)} \\[2ex] C & = & N_1 \exp\left\{\sqrt{\dfrac{\tau_1}{\sigma}}\right\} \end{cases}$$

Le processus peut être éventuellement amélioré en effectuant une troisième (voire plus) recherche pour déterminer avec une meilleure précision les paramètres σ et C de la caractéristique, avec un nombre de points de mesure supérieur à deux.

La fonction $N(\tau)$ pourra être paramétrée ainsi pour l'image courante. En fonction du nombre idéal $\hat{N}$ de points d'intérêt que l'on souhaite obtenir lors de l'analyse de l'image suivante, le seuil idéal correspondant $\hat{\tau}$ sera donné par :

$$\hat{\tau} = \sigma \ \ln^2 \frac{C}{\hat{N}}$$

Le résultat obtenu au fil des images successives de la séquence captée par la caméra est illustré en B sur la Figure 3 : comme on peut le voir, le nombre réel $N$ de points d'intérêt détectés reste extrêmement proche du nombre idéal $\hat{N}$, fixé ici à $\hat{N}$ = 2000 points d'intérêt, et ceci même pour une séquence d'images extrêmement hétérogène. Ce résultat est à comparer avec le nombre $N$ obtenu avec les techniques conventionnelles (courbe A) pour la même séquence d'images captées, nombre qui pouvait varier dans des proportions considérables, typiquement de moins de 1000 à plus de 8000 points d'intérêt selon les images.

Un perfectionnement de l'invention consiste à opérer une prédiction du seuil de détection optimal non seulement d'une image à la suivante, mais également, au sein de la même image, sur des résolutions différentes, successivement croissantes, de la même image.

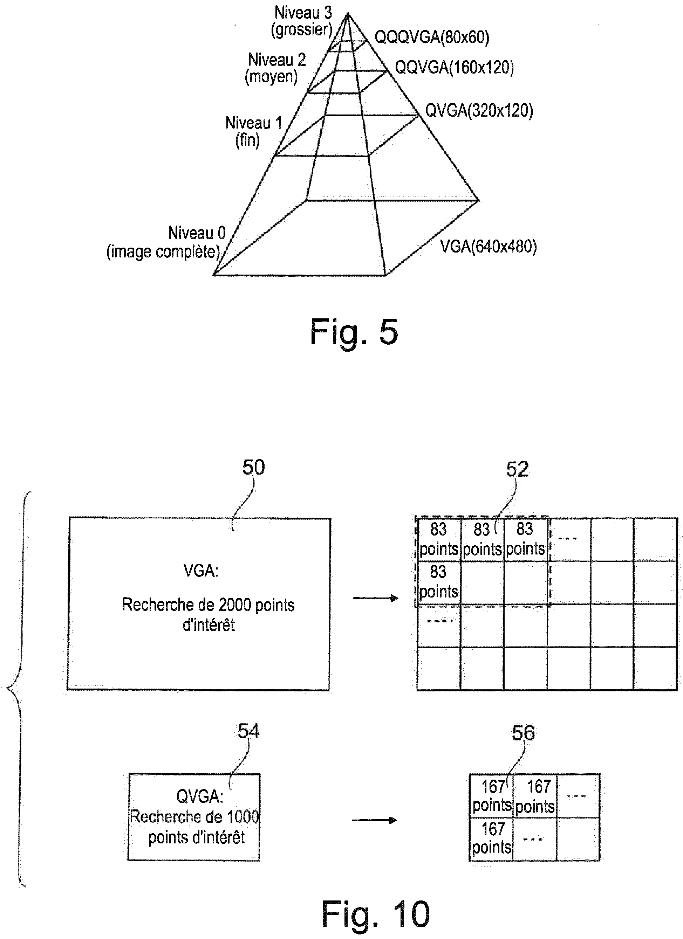

À cet effet, l'algorithme utilise, comme illustré Figure 5, une représentation multirésolution de l'image courante de type "pyramide d'images". Le principe général de la pyramide d'images est par exemple exposé par :

[6] G. Klein and D. W. Murray, "Parallel Tracking and Mapping for Small AR Workspaces," ISMAR, 2007.

Dans le cas présent, on choisit par exemple des résolutions avec des échelles successives dans un rapport linéaire de 1:2 à chaque fois, avec :

- un niveau initial (image complète) VGA (640 x 480) ;
- un niveau 1 (résolution réduite, mais fine) QVGA (320 x 120) ;
- un niveau 2 (résolution moyenne) QQVGA (160 x 120) ; et
- un niveau 3 (résolution la plus grossière) QQQVGA (80 x 60).

Cet exemple n'est bien entendu pas limitatif, et il serait possible d'opérer en commençant par exemple avec une résolution HD 720p.

La représentation multirésolution permet notamment de prendre en compte l'impact erratique des systèmes de réglage automatique de l'exposition des caméras utilisées.

En effet, une modification du réglage d'exposition peut aisément conduire à une variation du simple au double du nombre de points d'intérêt détectés alors même que, visuellement, les deux images successives sont tout à fait similaires et correspondent à peu près à la même scène captée. Ce phénomène introduit un effet dynamique important auquel les algorithmes de type FAST sont particulièrement sensibles, dans la mesure où ils n'opèrent pas de normalisation en fonction du contraste.

La représentation multirésolution pyramidale permet d'adapter la prédiction du seuil en tenant compte du fait que les effets tels que les réglages automatiques d'exposition produisent des conséquences identiques sur chaque niveau de la pyramide.

Plus précisément, l'algorithme utilise les propriétés de l'image à une échelle grossière comme prédicteur pour ces mêmes propriétés à des échelles plus fines (lien inter-échelles), et les propriétés de l'image à une échelle donnée pour l'image courante seront utilisées comme prédicteur pour les mêmes propriétés à l'image suivante, à la même échelle (lien inter-images). Les variations aux échelles grossières pourront être très rapidement intégrées dans la prédiction pour les niveaux ultérieurs de la pyramide.

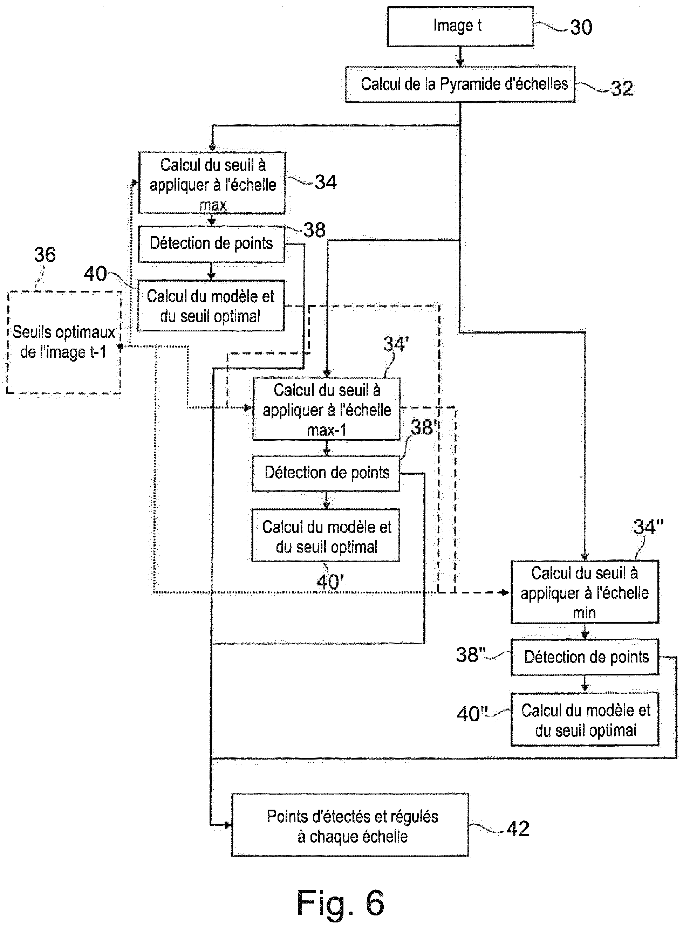

Cet enchainement d'étapes est détaillé sur la Figure 6 : après recueil de l'image (bloc 30) et calcul de la pyramide d'échelles (bloc 32), l'algorithme calcule (bloc 34) le seuil à appliquer à l'échelle maximale (la plus grossière) à partir de la valeur de seuil optimale précédemment déterminée, pour cette même échelle, à l'image précédente (bloc 36). La détection des points d'intérêt est alors exécutée (bloc 38) avec cette valeur de seuil de détection, permettant ainsi de calculer les paramètres *C* et σ du modèle exponentiel et déterminer ainsi le seuil optimal τ pour l'image courante (bloc 40).

Ces opérations sont réitérées à l'échelle de niveau inférieur (blocs 34', 38', 40') à partir i) de la valeur de seuil déterminée pour ce même niveau sur l'image précédente (bloc 36) et ii) de la valeur de seuil optimale qui vient d'être déterminée (étape 40) pour l'image courante à l'échelle juste supérieure.

Ces calculs sont réitérés pour les niveaux successifs de la pyramide, jusqu'au niveau le plus bas (blocs 34", 38", 40"), donnant ainsi le nombre optimal de points d'intérêt détectés et régulés pour chaque échelle (bloc 42). En termes généraux, pour l'image *t* à l'échelle *k*, on cherche le seuil à appliquer en fonction du seuil optimal de cette même échelle *k* de l'image précédente *t*-1 et des couples {seuil optimal, seuil appliqué} de l'image courante *t* aux échelles supérieures *q > k* :

$$s_t^k = f\left(\hat{s}_{t-1}^k, \left(\hat{s}_t^q, s_t^q\right)_{q>k}\right)$$

où :

- l'indice *t* désigne le numéro de l'image,
- l'exposant *k* désigne l'échelle,
- $s_t^k$ désigne le seuil appliqué pour l'image d'indice *t* à l'échelle *k*, et
- $\hat{s}_t^k$ désigne le seuil optimal pour l'image d'indice *t* à l'échelle *k*.

Par exemple la fonction *f* peut être (avec des $\lambda_q^k$ à déterminer) :

$$s_t^k = \hat{s}_{t-1}^k + \sum_{q>k} \lambda_q^k\left(\hat{s}_t^q - s_t^q\right)$$

ou encore :

$$s_t^k = \hat{s}_{t-1}^k \frac{s_t^{k+1}}{\hat{s}_t^{k+1}}$$

En variante, on pourrait utiliser les paramètres de réglage de la caméra (auto-exposition, balance des blancs...) à l'image *t*, notés $p_t$ :

$$s_t^k = f\left(\hat{s}_{t-1}^k, p_t\right)$$

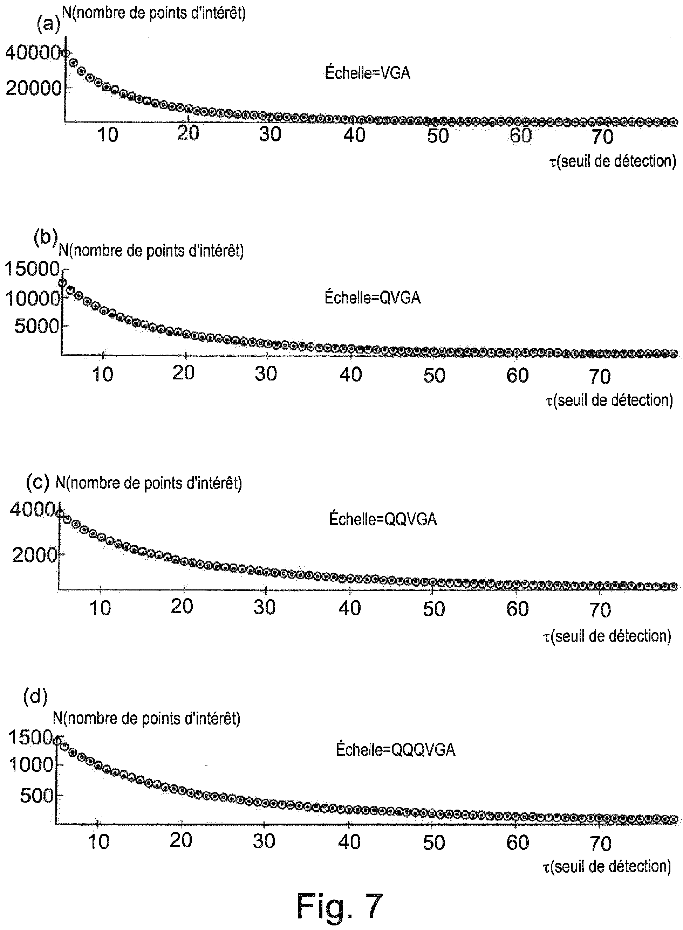

La Figure 7 donne un exemple de caractéristiques $N(\tau)$ pour les échelles successives VGA ... QQQVGA (caractéristiques (a) à (d), respectivement), les points indiquant les valeurs calculées par modélisation et les cercles indiquant les données réelles, ce qui permet de constater une excellente correspondance entre le modèle et la réalité pour les quatre échelles d'une même image.

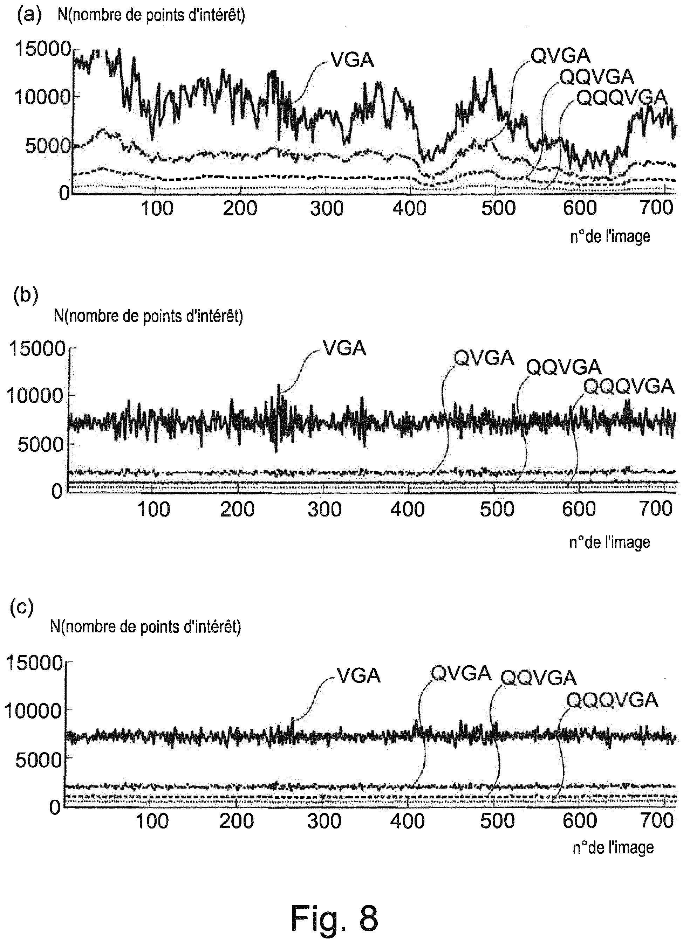

Sur la Figure 8, on a illustré pour une séquence d'images les variations du nombre N de points d'intérêt détectés aux différentes résolutions VGA ... QQQVGA, dans les conditions suivantes :

- en (a) pour un seuil constant fixé à τ = 20, correspondant donc à un algorithme FAST de type conventionnel ;

- en (b) avec prédiction inter-images du seuil de détection (prédiction temporelle), selon l'invention ;
- en (c) selon la même technique qu'en (b), mais avec en outre application d'une représentation multirésolution et d'une prédiction inter-échelle (prédiction spatiale) comme exposé plus haut en référence à la Figure 6.

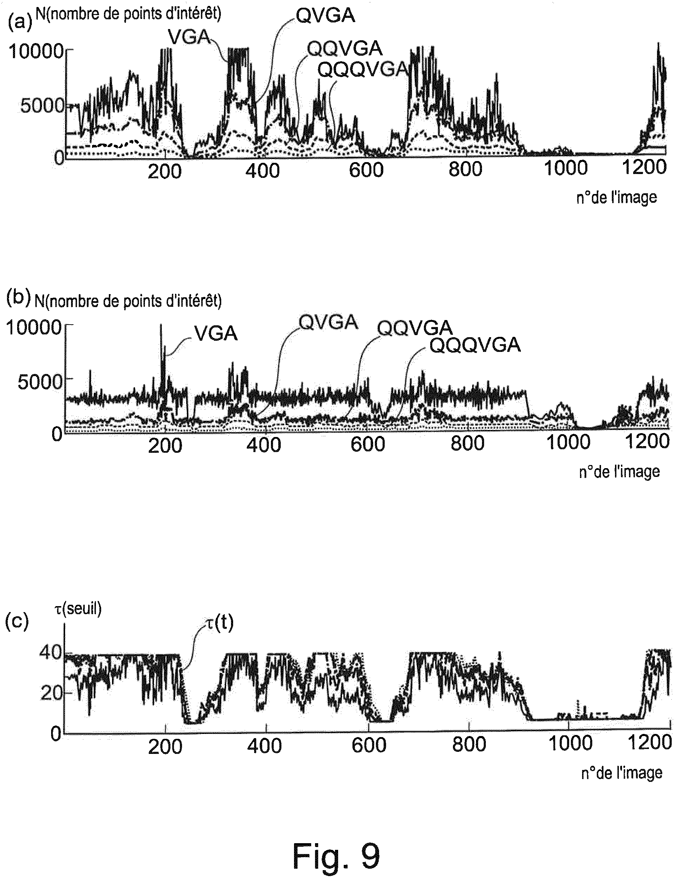

La Figure 9 est une représentation comparable donnant :

- en (a) : les variations du nombre N de points d'intérêt détectés aux différentes résolutions VGA ... QQQVGA par une technique conventionnelle avec un seuil constant $\tau$ = 25 ;
- en (b) : ces mêmes variations du nombre de points d'intérêt, détectés par une technique selon l'invention en appliquant comme seuil de détection la valeur optimale calculée pour l'image précédente ; et
- en (c), les variations instantanées, image par image, du seuil $\tau$ correspondant.

Enfin, pour compenser le problème évoqué en introduction de l'instabilité spatiale, la technique de l'invention se prête très bien à l'application d'une technique de *bucketing,* consistant à diviser l'image courante en une pluralité de sous-images indépendantes de taille réduite, et à appliquer l'algorithme de détection de points d'intérêt indépendamment aux différentes sous-images.
Les principes du *bucketing* sont par exemple décrits dans :

[7] R. Voigt, J. Nikolic, C. Hurzeler, S. Weiss, L. Kneip, and R. Siegwart, "Robust Embedded Egomotion Estimation", 2011 IEEE/RSJ International Conference on Intelligent Robots and Systems (IROS), 2011, pp. 2694-2699.
[8] B. Kitt, A. Geiger, and H. Lategahn, "Visual Odometry Based on Stereo Image Sequences with Ransac-Based Outlier Rejection Scheme", 2010 IEEE Intelligent Vehicles (IV) Symposium, June 2010, pp. 486-492.

Ainsi, comme illustré Figure 10, au lieu de rechercher par exemple 2000 points d'intérêt sur l'image complète 50 en résolution VGA, on divise cette image en 6 x 4 sous-images 52 et on recherche dans chaque sous-image 2000/(6 x 4) ∼ 83 points d'intérêt.
De même, au lieu de rechercher 1000 points d'intérêt dans une image 54 en résolution QGVA, on divise cette image QVGA en 3 x 2 sous-images 56 et on recherche 167 points d'intérêt dans chaque sous-image.
Les seuils prédits et utilisés seront différents pour chaque sous-image et pour chaque résolution (en appliquant la technique de la pyramide d'échelles exposée plus haut).
Plus précisément, dans la relation inter-résolution on se servira du résultat obtenu à l'échelle *L*-1 dans la sous-image correspondante, par exemple les quatre sous-images 52 encadrées en tiretés de la résolution VGA utiliseront la sous-image 56 en haut à gauche de l'échelle QVGA pour le calcul du seuil.
On notera que l'intégration d'un *bucketing* dans la détection des points d'intérêt avec l'algorithme de l'invention se fait sans surcoût significatif en termes de temps de calcul et de ressources informatiques, ce qui permet en d'autres termes de garantir sans surcoût une répartition optimisée des points d'intérêt dans les différentes régions de l'image, permettant ainsi de résoudre le problème évoqué en introduction de l'instabilité spatiale, rencontré avec les algorithmes de détection de points d'intérêt conventionnels.

## Revendications

**1.** Un procédé de détection de points d'intérêt dans une image numérique d'une séquence d'images (12) d'une scène captée par une caméra (10), ce procédé mettant en oeuvre un algorithme (14) de recherche de points d'intérêt paramétrable par un seuil de détection ($\tau$) tel que le nombre (*N*) de points d'intérêt détectés dans l'image varie en fonction du niveau du seuil,
ce procédé étant **caractérisé par** une modélisation par une fonction exponentielle décroissante de la caractéristique donnant le nombre (*N*) de points d'intérêt détectés en fonction du seuil ($\tau$), cette fonction exponentielle étant paramétrable dynamiquement par des valeurs (*C*, $\sigma$) liées à une image à analyser,
et en ce qu'il comprend les étapes suivantes :

a) détermination (18), pour une image courante, des valeurs de paramétrage (C, $\sigma$) de la fonction exponentielle décroissante ;
b) prédiction (18), pour ladite image courante, d'une valeur optimale du seuil de détection ($\tau$) par utilisation de la caractéristique modélisée, paramétrée avec les valeurs déterminées à l'étape a) ; et
c) application (14), pour au moins une image suivant ladite image courante, de l'algorithme de recherche de points d'intérêt avec la valeur optimale de seuil de détection ($\tau$) calculée à l'étape b).

**2.** Le procédé de la revendication 1, dans lequel ladite valeur optimale de seuil de détection ($\tau$) prédite à l'étape b) est une valeur correspondant à un nombre donné ($N$) de points d'intérêt, tel qu'indiqué par ladite caractéristique donnant le nombre de points d'intérêt détectés en fonction du seuil.

**3.** Le procédé de la revendication 1, dans lequel ladite fonction exponentielle décroissante est une fonction exponentielle décroissante en racine carrée :

$$N(\tau) = C \exp\left\{ -\sqrt{\frac{\tau}{\sigma}} \right\}$$

$\tau$ étant la valeur du seuil de détection, ramenée à une quantité homogène au pixel,
$N$ étant le nombre de points d'intérêt détectés pour un seuil $\tau$, et
$C$ et $\sigma$ étant lesdites valeurs de paramétrage liées à l'image courante.

**4.** Le procédé de la revendication 1, dans lequel l'étape a) de détermination, pour une image courante, des valeurs de paramétrage de la fonction exponentielle comprend les sous-étapes suivantes :

a1) une première recherche de points d'intérêt dans l'image courante par l'algorithme de recherche (14) avec une première valeur prédéterminée ($\tau_1$) du seuil de détection, donnant pour résultat un premier nombre de points d'intérêt ($N_1$) ;
a2) au moins une seconde recherche de points d'intérêt dans l'image courante par l'algorithme de recherche (14) avec une seconde valeur ($\tau_2$) du seuil de détection supérieure à la première valeur prédéterminée ($\tau_1$) du seuil de détection, donnant pour résultat un second nombre de points d'intérêt ($N_2$) ; et
a3) la détermination des valeurs de paramétrage $C$ et $\sigma$ à partir des nombres de points d'intérêt $(N_1, N_2)$ obtenus aux étapes a1) et a2).

**5.** Le procédé de la revendication 1, comprenant en outre, lors de l'exécution itérative des étapes a) et b) :

- l'application d'informations d'auto-exposition de la caméra comme données d'entrée complémentaires pour la prédiction du seuil de détection.

**6.** Le procédé de la revendication 1, comprenant en outre :

- la division de l'image courante (50 ; 54) en une pluralité de sous-images (52 ; 56) de taille réduite ;
- l'exécution des étapes a) et b) indépendamment pour les différentes sous-images de l'image courante, avec pour résultat une valeur optimale de seuil de détection propre à chaque sous-image ; et
- l'exécution de l'étape c) avec application, pour chaque sous-image de l'image suivante, de l'algorithme de recherche de points d'intérêt avec la valeur optimale de seuil de détection respective propre à cette sous-image.

**7.** Le procédé de la revendication 6, dans lequel la valeur optimale de seuil de détection est une valeur correspondant à un même nombre prédéterminé de points d'intérêt pour toutes les sous-images.

**8.** Le procédé de la revendication 1, comprenant en outre :

- préalablement à l'étape a), la production (30, 32) d'une représentation multirésolution de type pyramide d'images, modélisant l'image courante de la scène captée à différentes résolutions successivement croissantes (QQQVGA, QQVGA, QVGA, VGA) ; et
- l'exécution itérative des étapes a) et b) pour chaque niveau de la représentation multirésolution (34, 38, 40) en commençant par le niveau de moindre résolution (QQQVGA), la valeur de seuil de détection déterminée pour un niveau donné étant appliquée comme donnée d'entrée pour la prédiction du seuil de détection au niveau de résolution supérieure.

**9.** Le procédé de la revendication 8, comprenant en outre :

- l'exécution de l'étape c) avec application, pour chaque niveau de la représentation multirésolution de l'image suivante, de l'algorithme de recherche de points d'intérêt avec la valeur optimale de seuil de détection respective propre à ce niveau.

**10.** Le procédé de la revendication 8, comprenant en outre, lors de l'exécution itérative des étapes a) et b) pour chaque niveau de la représentation multirésolution :

- l'application, comme données d'entrée complémentaires pour la prédiction du seuil de détection au niveau de résolution supérieure, des seuils optimaux et des seuils appliqués correspondant aux niveaux de résolutions inférieurs.

**11.** Le procédé de la revendication 8, comprenant en outre, lors de l'exécution itérative des étapes a) et b) pour chaque niveau de la représentation multirésolution :

- l'application, comme données d'entrée complémentaires pour la prédiction du seuil de détection au niveau de résolution supérieure, d'informations d'auto-exposition de la caméra.

**12.** Le procédé de la revendication 8, comprenant en outre :

- la division des images aux différents niveaux de la pyramide d'images (50 ; 54) en une pluralité de sous-images (52 ; 56) de taille réduite ;
- l'exécution des étapes a) et b) indépendamment pour les différentes sous-images, avec pour résultat une valeur optimale de seuil de détection propre à chaque sous-image ; et
- l'exécution de l'étape c) avec application, pour chaque sous-image de l'image suivante, de l'algorithme de recherche de points d'intérêt avec la valeur optimale de seuil de détection respective propre à cette sous-image.

**13.** Le procédé de la revendication 12, dans lequel la valeur optimale de seuil de détection est une valeur correspondant à un même nombre prédéterminé de points d'intérêt pour toutes les sous-images.

## Patentansprüche

**1.** Verfahren zur Erfassung von interessierenden Punkten in einem digitalen Bild einer Bildfolge (12) einer von einer Kamera (10) eingefangenen Szene, wobei dieses Verfahren einen Suchalgorithmus (14) interessierender Punkte anwendet, der durch eine Erfassungsschwelle ($\tau$) parametrierbar ist, derart, dass die Anzahl (N) von im Bild erfassten interessierenden Punkten abhängig vom Pegel der Schwelle variiert,
wobei dieses Verfahren durch eine Modellierung durch eine abnehmende Exponentialfunktion des Kennwerts gekennzeichnet ist, der die Anzahl (N) von erfassten interessierenden Punkten abhängig von der Schwelle ($\tau$) ergibt, wobei diese Exponentialfunktion durch Werte (C, $\sigma$) dynamisch parametrierbar ist, die mit einem zu analysierenden Bild verbunden sind,
und dadurch, dass es die folgenden Schritte enthält:

a) Bestimmung (18), für ein aktuelles Bild, der Parametrierungswerte (C, $\sigma$) der abnehmenden Exponentialfunktion;
b) Vorhersage (18), für das aktuelle Bild, eines optimalen Werts der Erfassungsschwelle ($\tau$) durch Verwendung des modellisierten Kennwerts, parametriert mit den im Schritt a) bestimmten Werten; und
c) Anwendung (14), für mindestens ein auf das aktuelle Bild folgendes Bild, des Suchalgorithmus von interessierenden Punkten mit dem im Schritt b) berechneten optimalen Erfassungsschwellenwert ($\tau$).

**2.** Verfahren nach Anspruch 1, wobei der im Schritt b) vorhergesagte optimale Erfassungsschwellenwert ($\tau$) ein Wert entsprechend einer gegebenen Anzahl (N) von interessierenden Punkten ist, wie vom Kennwert angezeigt, der die Anzahl von erfassten interessierenden Punkten abhängig von der Schwelle ergibt.

**3.** Verfahren nach Anspruch 1, wobei die abnehmende Exponentialfunktion eine abnehmende Exponentialfunktion in Quadratwurzel ist:

$$N(\tau) = C \exp\left\{ - \sqrt{\frac{\tau}{\sigma}} \right\}$$

wobei

$\tau$ der Wert der Erfassungsschwelle ist, rückgeführt auf eine Menge homogen zum Pixel,
N die Anzahl von erfassten interessierenden Punkten für eine Schwelle $\tau$ ist, und
C und $\sigma$ die mit dem aktuellen Bild verbundenen Parametrierungswerte sind.

4. Verfahren nach Anspruch 1, wobei der Schritt a) der Bestimmung, für ein aktuelles Bild, der Parametrierungswerte der Exponentialfunktion die folgenden Teilschritte enthält:

a1) eine erste Suche nach interessierenden Punkten im aktuellen Bild durch den Suchalgorithmus (14) mit einem ersten vorbestimmten Wert ($\tau_1$) der Erfassungsschwelle, die als Ergebnis eine erste Anzahl von interessierenden Punkten ($N_1$) ergibt;
a2) mindestens eine zweite Suche nach interessierenden Punkten im aktuellen Bild durch den Suchalgorithmus (14) mit einem zweiten Wert ($\tau_2$) der Erfassungsschwelle höher als der erste vorbestimmte Wert ($\tau_1$) der Erfassungsschwelle, die als Ergebnis eine zweite Anzahl von interessierenden Punkten ($N_2$) ergibt, und
a3) die Bestimmung der Parametrierungswerte C und $\sigma$ ausgehend von den Anzahlen von interessierenden Punkten ($N_1$, $N_2$), die in den Schritten a1) und a2) erhalten werden.

5. Verfahren nach Anspruch 1, das außerdem bei der iterativen Ausführung der Schritte a) und b) enthält:

- die Anwendung von Informationen der automatischen Belichtung der Kamera als komplementäre Eingangsdaten für die Vorhersage der Erfassungsschwelle.

6. Verfahren nach Anspruch 1, das außerdem enthält:

- die Teilung des aktuellen Bilds (50; 54) in eine Vielzahl von Teilbildern (52; 56) reduzierter Größe;
- die Ausführung der Schritte a) und b) unabhängig für die verschiedenen Teilbilder des aktuellen Bilds, mit als Ergebnis einem optimalen Erfassungsschwellenwert, der jedem Teilbild eigen ist; und
- die Ausführung des Schritts c) mit Anwendung, für jedes Teilbild des folgenden Bilds, des Suchalgorithmus von interessierenden Punkten mit dem jeweiligen optimalen Erfassungsschwellenwert, der diesem Teilbild eigen ist.

7. Verfahren nach Anspruch 6, wobei der optimale Erfassungsschwellenwert ein Wert ist, der der gleichen vorbestimmten Anzahl von interessierenden Punkten für alle Teilbilder entspricht.

8. Verfahren nach Anspruch 1, das weiter enthält:

- vor dem Schritt a), die Erzeugung (30, 32) einer Mehrfachauflösungsdarstellung der Art Bilderpyramide, die das aktuelle Bild der Szene modelliert, die in verschiedenen nacheinander zunehmenden Auflösungen (QQQVGA, QQVGA, QVGA, VGA) erfasst wird; und
- die iterative Ausführung der Schritte a) und b) für jeden Pegel der Mehrfachauflösungsdarstellung (34, 38, 40), beginnend mit dem Pegel geringerer Auflösung (QQQVGA), wobei der für einen gegebenen Pegel festgelegte Erfassungsschwellenwert als Eingangsdatenwert für die Vorhersage der Erfassungsschwelle auf dem höheren Auflösungspegel angewendet wird.

9. Verfahren nach Anspruch 8, das außerdem enthält:

- die Ausführung des Schritts c) mit Anwendung, für jeden Pegel der Mehrfachauflösungsdarstellung des folgenden Bilds, des Suchalgorithmus von interessierenden Punkten mit dem jeweiligen optimalen Erfassungsschwellenwert, der diesem Pegel eigen ist.

10. Verfahren nach Anspruch 8, das außerdem bei der iterativen Ausführung der Schritte a) und b) für jeden Pegel der Mehrauflösungsdarstellung enthält:

- die Anwendung, als komplementäre Eingangsdaten für die Vorhersage der Erfassungsschwelle auf dem oberen Auflösungspegel, der optimalen Schwellen und der angewendeten Schwellen, die den unteren Auflösungspegeln entsprechen.

**11.** Verfahren nach Anspruch 8, das außerdem bei der iterativen Ausführung der Schritte a) und b) für jeden Pegel der Mehrfachauflösungsdarstellung enthält:

- die Anwendung, als komplementäre Eingangsdaten für die Vorhersage der Erfassungsschwelle auf dem oberen Auflösungspegel, von Informationen über die automatische Belichtung der Kamera.

**12.** Verfahren nach Anspruch 8, das weiter enthält:

- die Teilung der Bilder auf den verschiedenen Pegeln der Bilderpyramide (50; 54) in eine Vielzahl von Teilbildern (52; 56) reduzierter Größe;
- die Ausführung der Schritte a) und b) unabhängig für die verschiedenen Teilbilder, mit als Ergebnis einem optimalen Erfassungsschwellenwert, der jedem Teilbild eigen ist; und
- die Ausführung des Schritts c) mit Anwendung, für jedes Teilbild des folgenden Bilds, des Suchalgorithmus von interessierenden Punkten mit dem jeweiligen optimalen Erfassungsschwellenwert, der diesem Teilbild eigen ist.

**13.** Verfahren nach Anspruch 12, wobei der optimale Erfassungsschwellenwert ein Wert ist, der einer gleichen vorbestimmten Anzahl von interessierenden Punkten für alle Teilbilder entspricht.

**Claims**

**1.** A method of detection of points of interest in a digital image of a sequence of images (12) of a scene captured by a camera (10), said method implementing a point-of-interest search algorithm (14) that is parameterizable by a detection threshold ($\tau$) such that the number ($N$) of points of interest detected in the image varies as a function of the threshold level,
said method being **characterized by** a modelling by a decreasing exponential function of the characteristic giving the number ($N$) of points of interest detected as a function of the threshold ($\tau$), said exponential function being dynamically parameterizable by values ($C$, $\sigma$) linked to an image to be analysed,
and in that it comprises the following steps:

a) determining (18), for a current image, the parameterization values ($C$, $\sigma$) of the decreasing exponential function;
b) predicting (18), for said current image, an optimum value of the detection threshold ($\tau$) using the modelled characteristic, parameterized with the values determined at step a); and
c) applying (14), for at least one image following said current image, the point-of-interest search algorithm with the optimum detection threshold value ($\tau$) calculated at step b).

**2.** The method of claim 1, wherein said optimum detection threshold value ($\tau$) predicted at step b) is a value corresponding to a given number ($N$) of points of interest, as indicated by said characteristic giving the number of points of interest detected as a function of the threshold.

**3.** The method of claim 1, wherein said decreasing exponential function is a square root decreasing exponential function :

$$N(\tau) = C\,exp\left\{-\sqrt{\frac{\tau}{\sigma}}\right\}$$

$\tau$ being the detection threshold value, normalized to a quantity homogeneous with the pixel,
N being the number of points of interest detected for a threshold $\tau$, and
$C$ and $\sigma$ being said parameterization values linked to the current image.

**4.** The method of claim 1, wherein step a) of determining, for a current image, the parameterization values of the exponential function comprises the following sub-steps:

a1) a first search for points of interest in the current image by the search algorithm (14) with a first predetermined value ($\tau_1$) of the detection threshold, giving for result a first number of points of interest ($N_1$);

a2) at least one second search for points of interest in the current image by the search algorithm (14) with a second value ($\tau_2$) of the detection threshold higher than the first predetermined value ($\tau_1$) of the detection threshold, giving for result a second number of points of interest ($N_2$); and

a3) determining the parameterization values $C$ and $\sigma$ from the numbers of points of interest ($N_1$, $N_2$) obtained at steps a1) and a2).

5. The method of claim 1, further comprising, during the iterative execution of steps a) and b):

- applying camera auto-exposure information as complementary input data for predicting the detection threshold.

6. The method of claim 1, further comprising:

- dividing the current image (50; 54) into a plurality of sub-images (52; 56) of reduced size;
- executing steps a) and b) independently for the different sub-images of the current image, with for result an optimum detection threshold value peculiar to each sub-image; and
- executing step c) with application, for each sub-image of the following image, of the point-of-interest search algorithm with the respective optimum detection threshold value peculiar to this image.

7. The method of claim 6, wherein the optimum detection threshold value is a value corresponding to a same predetermined number of points of interest for all the sub-images.

8. The method of claim 1, further comprising:

- previously to step a), producing (30, 32) a multi-resolution representation of the image pyramid type, modelling the current image of the scene captured at different successively increasing resolutions (QQQVGA, QQVGA, QVGA, VGA); and
- iteratively executing steps a) and b) for each level of the multi-resolution representation (34, 38, 40), starting from the lowest resolution level (QQQVGA), the detection threshold value determined for a given level being applied as input data for the predicting the detection threshold at the higher resolution level.

9. The method of claim 8, further comprising:

- executing step c) with application, for each level of the multi-resolution representation of the following image, of the point-of-interest search algorithm with the respective optimum detection threshold value peculiar to this level.

10. The method of claim 8, further comprising, during the iterative execution of steps a) and b) for each level of the multi-resolution representation:

- applying, as complementary input data for predicting the detection threshold at the higher resolution level, the optimum thresholds and the applied threshold corresponding to the lower resolution levels.

11. The method of claim 8, further comprising, during the iterative execution of steps a) and b) for each level of the multi-resolution representation:

- applying, as complementary input data for predicting the detection threshold at the higher resolution level, camera auto-exposure information.

12. The method of claim 8, further comprising:

- dividing the images at the different levels of the image pyramid (50; 54) into a plurality of sub-images (52; 56) of reduced size;
- executing steps a) and b) independently for the different sub-images, with for result an optimum detection threshold value peculiar to each sub-image; and
- executing step c) with application, for each sub-image of the following image, of the point-of-interest search algorithm with the respective optimum detection threshold value peculiar to this sub-image.

13. The method of claim 12, wherein the optimum detection threshold value is a value corresponding to a same predetermined number of points of interest for all the sub-images.

Analyse de l'image courante ~18

12

10

t-1
t
t+1
...

τ: seuil de détection

Détection des points d'intérêt dans chaque image(algorithme FAST,SURF, SIFT,...)
...

N points d'intérêt

Suivi des points d'intérêt et analyse de leurs dèplacements d'une image à l'autre

localisation, cartographie 3D
...
(algorithmes SLAM)

14

16

## Fig. 1

|  |  |  |  |  |  |  |  |  |  |  |
|---|---|---|---|---|---|---|---|---|---|---|
|  |  |  |  |  |  |  |  |  |  |  |
|  |  |  |  | $X_{16}$ | $X_1$ | $X_2$ |  |  |  |  |
|  |  |  | $X_{15}$ |  |  |  | $X_3$ |  |  |  |
|  | $X_{14}$ |  |  |  |  |  |  | $X_4$ |  |  |
|  | $X_{13}$ |  |  | $X$ |  |  |  | $X_5$ |  |  |
|  | $X_{12}$ |  |  |  |  |  |  | $X_6$ |  |  |
|  |  | $X_{11}$ |  |  |  |  | $X_7$ |  |  |  |
|  |  |  | $X_{10}$ | $X_9$ | $X_8$ |  |  |  |  |  |
|  |  |  |  |  |  |  |  |  |  |  |

## Fig. 2

N(nombre de points d'intérêt détectés)

n°de l'image

Fig. 3

N(nombre de points d'intérêt détectés)

$\tau$(seuil de détection)

Fig. 4

Niveau 3
(grossier)
QQQVGA(80x60)

Niveau 2
(moyen)
QQVGA(160x120)

QVGA(320x120)

Niveau 1
(fin)

Niveau 0
(image complète)
VGA(640x480)

# Fig. 5

50

52

VGA:

Recherche de 2000 points
d'intérêt

| 83 points | 83 points | 83 points | - - - | | |
| 83 points | | | | | |
| - - - | | | | | |
| | | | | | |

54

56

QVGA:
Recherche de 1000
points d'intérêt

| 167 points | 167 points | - - - |
| 167 points | - - - | |

# Fig. 10

Fig. 6

Fig. 7

Fig. 8

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013055448 A1

- US 20130279813 A1

**Littérature non-brevet citée dans la description**

- **E. ROSTEN ; R. PORTER ; T. DRUMMOND.** Faster and Better: A Machine Learning Approach to Corner Détection. *IEEE Trans. Pattern Analysis and Machine Intelligence,* 2010, vol. 32, 105-119
- **D. G. LOWE.** Distinctive Image Features from Scale-Invariant Key-points. *Int. J. Comput. Vision,* Novembre 2004, vol. 60 (2), 91-110
- **H. BAY ; A. ESS ; T. TUYTELAARS ; L. J. V. GOOL.** Speeded-up Robust Features (SURF). *Computer Vision and Image Understanding,* 2008, vol. 110 (3), 346-359
- **M.A. KHAN ; G. DAN ; V. FODOR.** Characterization of SURF Interest Point Distribution for Visual Processing in Sensor Networks. *18th International Conference on Digital Signal Processing (DSP),* 2013, 1-7

- **A. HUANG ; N. ROY ; A. BACHRACH ; P. HENRY ; M. KRAININ ; D. MATURANA ; D. FOX.** Visual Odometry and Mapping for Autonomous Flight using an RGB-D Camera. *Proc. of the International Symposium of Robotics Research (ISRR),* 2011
- **G. KLEIN ; D. W. MURRAY.** Parallel Tracking and Mapping for Small AR Workspaces. *ISMAR,* 2007
- **R. VOIGT ; J. NIKOLIC ; C. HURZELER ; S. WEISS ; L. KNEIP ; R. SIEGWART.** Robust Embedded Egomotion Estimation. *2011 IEEE/RSJ International Conference on Intelligent Robots and Systems (IROS),* 2011, 2694-2699
- **B. KITT ; A. GEIGER ; H. LATEGAHN.** Visual Odometry Based on Stereo Image Sequences with Ransac-Based Outlier Rejection Scheme. *2010 IEEE Intelligent Vehicles (IV) Symposium,* Juin 2010, 486-492